# EUROPÄISCHE PATENTSCHRIFT

(11) **EP 4 077 054 B1**
(45) Veröffentlichungstag und Bekanntmachung des Hinweises auf die Patenterteilung: **09.10.2024**
(21) Anmeldenummer: 20824341.0
(22) Anmeldetag: 02.12.2020
(51) Int. Cl.: B60R 11/04, B60R 1/00, B62D 53/08, B60D 1/36, B60D 1/62

(54) **SATTELKUPPLUNG MIT EINER KUPPLUNGSPLATTE UND EINER KAMERA**
FIFTH WHEEL COUPLING COMPRISING A COUPLING PLATE AND A CAMERA
SELLETTE D'ATTELAGE COMPRENANT UNE PLAQUE DE COUPLAGE ET UNE CAMÉRA

(30) Priorität: 20.12.2019 DE 102019008918
(43) Veröffentlichungstag der Anmeldung: 26.10.2022
(73) Patentinhaber: JOST-Werke Deutschland GmbH, 63263 Neu-Isenburg (DE)
(72) Erfinder: GITZEN, Stephan, 64560 Riedstadt (DE); MÜLLER, Mark, 60486 Frankfurt (DE); SAUPE, Swen, 55126 Mainz (DE)
(74) Vertreter: Straubel, Dirk
(86) Internationale Anmeldenummer: PCT/IB2020/061370
(87) Internationale Veröffentlichungsnummer: WO 2021/123990

(56) Entgegenhaltungen:
- DE-A1- 102004 029 130
- DE-A1- 102011 079 632
- DE-A1- 4 445 555
- US-A1- 2014 151 979

## Beschreibung

Die Erfindung betrifft eine Sattelkupplung mit einer Kupplungsplatte und einer Kamera gemäß der im Oberbegriff des Anspruchs 1 stehenden Merkmale.

Die Sattelkupplung ist üblicherweise auf einem Zugfahrzeug angeordnet und dient dazu, einen Auflieger mittels eines daran befestigten Königszapfens mechanisch mit dem Zugfahrzeug zu verbinden. Hierfür weist die Sattelkupplung eine Kupplungsplatte auf, die über Lagerelemente an dem Zugfahrzeug abgestützt ist und an deren Unterseite üblicherweise eine Verschlussmechanik zur Verriegelung des Königszapfens vorgesehen ist. Während des Ankuppelns nähert sich das Zugfahrzeug rückwärts an den stehenden Auflieger an, so dass der Königszapfen in eine Einfahröffnung der Sattelkupplung gelangt und von dort bis zum Erreichen seiner Endlage in einem Verschlussbereich geführt ist.

Mit Hilfe einer am Zugfahrzeug befestigten Kamera soll die Annäherung des Zugfahrzeugs an den Auflieger für den Fahrer vereinfacht oder sogar automatisiert durchgeführt werden. Die US 2014/0151979 A1 schlägt hierfür eine Anbringung der Kamera auf einer eigens für die Kamera zwischen den Holmen des Zugfahrzeugs angeordneten Quertraverse vor, welche in Fahrzeuglängsrichtung zwischen der Sattelkupplung und dem Heck des Zugfahrzeugs angeordnet ist. Die Kamera kann hierdurch mittig in der Fahrzeuglängsachse ausgerichtet sein und soll dadurch eine exakte Annäherung des Zugfahrzeugs in Richtung des Aufliegers ermöglichen. Als nachteilig hat sich jedoch herausgestellt, dass sich die Kamera hinter den Rädern des Zugfahrzeugs befindet und besonders stark aufgewirbeltem Schmutz ausgesetzt ist, der zu einer erheblichen optischen Beeinträchtigung der Kamera führt. Überdies führt eine endseitige Position der Kamera am Heck des Zugfahrzeugs dazu, dass die Kamera bei ausgefahrener Luftfederung während des Ankuppelns vom Königszapfen leicht getroffen und zerstört werden kann. Da die rückwärtig ausgerichtete Kamera sehr früh vom Königszapfen überfahren und die Naherkennung des Königszapfens bei Eintritt in die Einfahröffnung der Kupplungsplatte von der Kamera nicht mehr erfasst wird, ist eine zweite, vorwärts ausgerichtete Kamera notwendig, die das Gesamtsystem verhältnismäßig teuer macht.

Einen anderen Stand der Technik bildet die DE 10 2004 029 130 A1 mit einer Kamera, die unter oder in der Sattelkupplung angeordnet sein soll, um aufgrund der zentrischen Position der Kamera den Königszapfen wesentlich leichter detektieren zu können, als wenn die Kamera seitlich an der Sattelkupplung angebracht wäre. Eine in der Fahrzeuglängsachse befindliche Kameraposition hat jedoch die nachteilige Konsequenz, dass sich die Kamera stets im Einwirkungsbereich des Königszapfens befindet und dadurch einem erhöhten Beschädigungsrisiko ausgesetzt ist. Überdies ist der zentrisch in der Kupplungsplatte angeordnete Verschlussbereich stets mit Schmierfett versorgt, welches fortwährend auf die Kamera gelangt und dort ebenfalls optische Beeinträchtigungen verursacht.

Der Erfindung lag daher die Aufgabe zugrunde, die Kamera in einer Position im Bereich der Sattelkupplung mit möglichst geringem Verschmutzungs- und Beschädigungsrisiko anzubringen.

Die Aufgabe wird erfindungsgemäß mit den Merkmalen des Anspruchs 1 gelöst. Die Kupplungsplatte ist von zwei in Querrichtung zueinander beabstandeten Lagerböcken um die Querrichtung schwenkbar gehalten. Zwischen den Lagerböcken befindet sich zentrisch in der Kupplungsplatte ein Verschlussbereich, in welchem ein vollständig in die Kupplungsplatte eingefahrener Königszapfen eines Aufliegers gehalten ist. Im angekuppelten Zustand eines Aufliegers stützt sich eine Aufliegerplatte des Aufliegers von oben auf einer den Verschlussbereich umgebenden Stützfläche der Kupplungsplatte ab. In dem Verschlussbereich mündet eine kanalförmig die Kupplungsplatte durchlaufende Einfahröffnung für ein Durchfahren des Königszapfens während des An- und Abkuppelns. Die Einfahröffnung ist an einem dem Verschlussbereich fernen Ende mit einem nach außen konisch aufgeweiteten Abschnitt ausgebildet. Dieser konisch aufgeweitete Abschnitt der Einfahröffnung ist beidseitig von Einfahrhörnern begrenzt. Die Einfahrhörner schließen die Kupplungsplatte bei einer auf einem Zugfahrzeug montierten Sattelkupplung heckseitig ab. In Richtung des Verschlussbereiches gehen die Einfahrhörner am schmalen Ende des konisch zulaufenden Abschnitts der Einfahröffnung in die Stützfläche der Kupplungsplatte über.

Die Kamera ist an einem der Einfahrhörner angeordnet. Hierdurch resultiert der Vorteil, dass in einen Sichtkegel der Kamera keine Aufbauten des Zugfahrzeugs hineinragen, da der Raum zwischen Sattelkupplung und Auflieger für den Ankuppelvorgang frei bleiben muss. Überdies befindet sich die Kamera in räumlicher Nähe zu einer in der Regel an einer Hinterachse des Zugfahrzeugs verbauten Luftfederung, so dass Höhe der Kamera ungefähr dem Ausfahrzustand der Luftfederung entspricht und rechnerisch keine Korrektur der von der Kamera bereitgestellten Daten zu erfolgen braucht.

Für eine frühzeitige Erkennung eines Aufliegers sollte die Kamera eine optische Achse aufweisen, die vorzugsweise parallel zu der axialen Erstreckung der Einfahröffnung ausgerichtet ist.

Vorteilhafterweise ist die Kamera gemäß einer ersten Ausführungsform der Erfindung an einer Unterseite von einem der Einfahrhörner befestigt. Hierdurch ist die Kamera im Fahrbetrieb weitgehend vor mechanischen Einflüssen aber auch vor Verschmutzung geschützt.

Besonders bevorzugt ist eine Ausgestaltung, bei der die Kamera innerhalb einer von der Kupplungsplatte aufgespannten Außenkontur angeordnet und in dem Einfahrhorn mit der Kamera ein Kameradurchbruch ausgebildet ist. Unter der von der Kupplungsplatte aufgespannten Außenkontur wird ein nach oben durch das jeweilige Einfahrhorn überdeckter und gegebenenfalls seitlich von einer Versteifungsschürze umgebender, vorzugsweise nach unten offener, freier Bauraum verstanden. Der Kameradurchbruch kann eine Bohrung oder eine offene Ausnehmung in einem Wandverlauf des jeweiligen mit der Kamera bestückten Einfahrhorns sein.

Die Einfahrhörner können auf ihrer Oberseite eine in Richtung der Stützfläche aufwärts geneigte Auffahrrampe aufweisen und der Kameradurchbruch kann in einer der Auffahrrampen ausgeformt sein. Die Auffahrrampen verlaufen von einem distalen niedrigen Niveau ansteigend in Richtung der Stützfläche und dienen dazu, eine geringfügig tiefer ausgerichtete Aufliegerplatte eines anzukuppelnden Aufliegers zu unterfahren und nach Kontaktierung durch weitere Annäherung anzuheben. Die Aufliegerplatte des Aufliegers rutscht sodann über die Auffahrrampen bis zum Erreichen der Stützfläche. Regelmäßig bilden die Auffahrrampen bei einer an einem Zugfahrzeug montierten Sattelkupplung einen heckseitigen Abschluss der Einfahrhörner. Der Kameradurchbruch ist dabei derart dimensioniert und angeordnet, dass eine Aufliegerplatte während des Ankuppelns über diese hinweggleitet.

Gemäß einer besonders günstigen Ausgestaltung weisen die Einfahrhörner eine senkrecht zur Stützfläche ausgerichtete Versteifungsschürze auf und der Kameradurchbruch ist in der Versteifungsschürze ausgeformt. Bei der Versteifungsschürze handelt es sich um eine Versteifungsrippe, die vorteilhafterweise zumindest abschnittsweise dem Außenumfang der Kupplungsplatte folgt und dabei von unten auch an den Einfahrhörnern angreift.

In einer alternativen, zweiten Ausführungsform der Erfindung kann die Kamera auf einer zur Einfahröffnung abgewandten Seite des Einfahrhorns angeordnet sein. Die Kamera befindet sich somit außerhalb der Außenkontur der Kupplungsplatte. Hierdurch lässt sich die Kamera besonders gut kontrollieren und unter Umständen auch reparieren.

Zweckmäßigerweise ist die Kamera seitlich beabstandet zu dem benachbarten Einfahrhorn angeordnet, wodurch das Risiko sinkt, von einem zu weit seitlich stehenden Königszapfen erfasst und zerstört zu werden.

Sinnvollerweise ist die Kamera von einem Kamerahalter getragen, der an der Kupplungsplatte, insbesondere an einem der Einfahrhörner, angreift.

Vorzugsweise ist die Kamera in Querrichtung der Kupplungsplatte unter einem vertikalen Niveau einer Oberseite der Einfahrhörner angeordnet. In gleicher Weise sollte der Kamerahalter unter dem Niveau der Oberseite der Einfahrhörner ausgerichtet sein. Hieraus resultiert der Vorteil, dass auch eine sehr tief befindliche Aufliegerplatte während des Ankuppelns über die Kamera und/oder dessen Kamerahalter hinweggleitet, ohne diese(n) zu beschädigen.

Für alle Ausführungsformen kann es vorteilhaft sein, wenn die Kupplungsplatte in lastfreiem Zustand mittels eines Federelementes zwangsausgerichtet ist. Unter einer Zwangsausrichtung wird eine Neigung der Kupplungsplatte derart um Ihre Querrichtung verstanden, dass die Oberseiten der Einfahrhörner gegebenenfalls mit ihren Auffahrrampen stärker geneigt sind als bei einer parallelen Ausrichtung der Stützfläche zu einem Fahrzeugrahmen oder einer Montageplatte der Sattelkupplung. Neben Vorteilen beim Ankuppeln des Aufliegers ermöglicht die Zwangsausrichtung der Kupplungsplatte eine definierte Ausrichtung der Kamera vor dem Ankuppeln, wodurch der von der Kamera zu erfassende Zielbereich am Auflieger besser erkannt wird.

Günstigerweise umfassen die Lagerelemente eine Verschiebeeinrichtung, mit welcher die Kupplungsplatte linear zwischen einer vorderen und einer hinteren Position verfahrbar ist. Mit Hilfe einer Verschiebeeinrichtung kann die Position der Kupplungsplatte in Längsrichtung relativ zum Fahrzeugrahmen verstellt werden. Sofern eine Verschiebeeinrichtung an dem Zugfahrzeug verbaut ist, verändert die stets ortsfest an der Kupplungsplatte verbaute Kamera ihre Position um das gleiche Maß wie die Kupplungsplatte, so dass rechnerisch keine Korrekturen der von der Kamera ausgegebenen Daten vorzunehmen sind.

Zum besseren Verständnis wird die Erfindung nachfolgend anhand von vier Figuren näher erläutert. Es zeigen die
- **Fig. 1:**: eine perspektivische Ansicht auf eine Sattelkupplung mit einer Kamera gemäß einer ersten Ausführungsform;
- **Fig. 2:**: einen Längsschnitt der Sattelkupplung in einer durch eines der Einfahrhörner verlaufenden Schnittebene gemäß Fig. 1 mit einem Kameradurchbruch in der Auffahrrampe;
- **Fig. 3:**: einen Längsschnitt gemäß Fig. 2 mit einem Kameradurchbruch in der Versteifungsschürze und
- **Fig. 4:**: eine perspektivische Ansicht auf eine Sattelkupplung mit einer Kamera gemäß einer zweiten Ausführungsform.

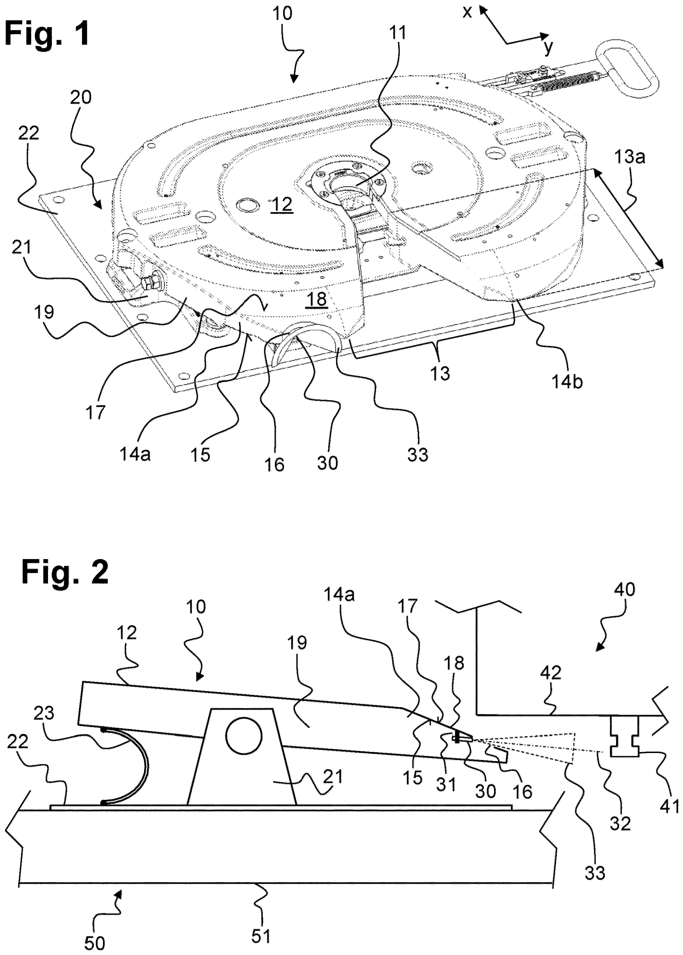

Die Fig. 1 zeigt in einer perspektivischen Ansicht und die Fig. 2 in einem Längsschnitt eine erste Ausführungsform der Erfindung umfassend eine Kupplungsplatte 10 mit einer daran befestigten Kamera 30. Die Kupplungsplatte 10 weist einen zentrisch darin angeordneten Verschlussbereich 11 auf, in welchem ein Königszapfen 41 eines Aufliegers 40 einfahrbar und verriegelbar ist (siehe Fig. 2).

Die Kupplungsplatte 10 ist über Lagerelemente 20 mit einem Fahrzeugrahmen 51 eines Zugfahrzeugs 50 verbunden. Zu den Lagerelementen 20 gehören insbesondere zwei Lagerböcke 21, die in Querrichtung y der Kupplungsplatte 10 beidseitig des Verschlussbereichs 11 angeordnet sind und eine Schwenkbewegung der Kupplungsplatte 10 um eine in der Querrichtung y verlaufende Achse ermöglichen. Die Lagerböcke 21 sind in der Darstellung der Fig. 1 auf einem weiteren Lagerelement 20 in Form einer Montageplatte 22 befestigt, die auf den Fahrzeugrahmen 51 aufgelegt und mit diesem ortsfest verbunden ist.

Der Verschlussbereich 11 der Kupplungsplatte 10 ist von einer ebenen Stützfläche 12 umgeben, auf welcher sich in angekuppeltem Zustand eine Aufliegerplatte 42 des Aufliegers 40 abstützten kann. Der Verschlussbereich 11 geht in Längsrichtung x der Kupplungsplatte 10 in eine Einfahröffnung 13 über, durch welche der Königszapfen 41 während des An- und Abkuppelns eines Aufliegers 40 hindurchfährt. An ihrem distalen Ende weist die Einfahröffnung 13 einen konisch aufgeweiteten Abschnitt 13a auf, mit dessen Hilfe ein in Querrichtung y zur Kupplungsplatte 10 leicht versetzt stehender Königszapfen 41 erfasst und bei weiterer Annäherung dem zentrisch in der Kupplungsplatte 10 angeordneten Verschlussbereich 11 zugeleitet wird.

Der konisch aufgeweitete Abschnitt 13a der Einfahröffnung 13 ist auf beiden Seiten jeweils von einem Einfahrhorn 14a, 14b begrenzt. In Längsrichtung x der Kupplungsplatte 10 erstrecken sich die Einfahrhörner 14a, 14b über den gesamten konisch aufgeweiteten Abschnitt 13a der Einfahröffnung 13.

Die Einfahrhörner 14a, 14b sind einstückig integraler Bestandteil der Kupplungsplatte 10. Neben der seitlichen Führung eines Königszapfens 41 übernehmen die Einfahrhörner 14a, 14b eine Höhenkorrektur einer mitunter zu niedrig ausgerichteten Aufliegerplatte 42. Hierfür sind die Einfahrhörner 14a, 14b ausgehend von ihrem in Längsrichtung x hinteren Ende mit einer in Richtung der Stützfläche 12 ansteigenden Auffahrrampe 18 ausgebildet.

Die Kamera 30 ist gemäß des in Fig. 1 dargestellten Ausführungsbeispiels an dem Einfahrhorn 14a befestigt, auf einer Unterseite 15 des Einfahrhorns 14a angeordnet und befindet sich unter der Auffahrrampe 18 in einem durch die Außenkontur von Kupplungsplatte 10 und dem Einfahrhorn 14a geschützten Bereich. Unter der Außenkontur wird ein nach unten offener, nach oben durch die Auffahrrampen 18 und seitlich durch eine Versteifungsschürze 19 umgebener Bauraum verstanden. Die Versteifungsschürze 19 greift an der Kupplungsplatte 10 an und folgt randseitig deren Verlauf bis in die Einfahrhörner 14a, 14b. Aufgrund einer Anbringung der Kamera 30 innerhalb der Außenkontur des Einfahrhorns 14a ist diese besonders gut gegen mechanische Einflüsse von außen geschützt.

In dem Einfahrhorn 14a mit der darin aufgenommenen Kamera 30 ist in der Auffahrrampe 18 und/oder der sich an die Auffahrrampe 18 anschließenden Versteifungsschürze 19 ein Kameradurchbruch 16 ausgeformt, welcher mit der Optik der Kamera 30 fluchtet und eine Bilderfassung ermöglicht. Der Kameradurchbruch 16 kann eine Bohrung oder ein Ausschnitt in der Auffahrrampe 18 und/oder Versteifungsschürze 19 sein. Von der Kamera 30 tritt ein Sichtkegel 33 durch den Kameradurchbruch 16 hindurch in Richtung des Aufliegers 40 und/oder dessen Königszapfen 41 (Fig. 2). Die Kamera 30 ist vorzugsweise unter der Auffahrrampe 18 des Einfahrhorns 14a angeordnet. Eine ortsfeste Anbringung der Kamera 30 zu der Kupplungsplatte 10 erfolgt mittels eines Kamerahalters 31, der vorzugsweise an der Unterseite 15 des Einfahrhorns 14a angreift.

Die Fig. 2 verdeutlicht die Ausrichtung des Sichtkegels 33 rings um eine optische Achse 32 der Kamera 30 im Wesentlichen parallel zu der Längsrichtung x der Kupplungsplatte 10. Der Sichtkegel 33 ist dabei soweit aufgefächert, dass unabhängig von der Ausrichtung der Kupplungsplatte 10 bezüglich der Lagerböcke 21 der Auflieger 40 und/oder der Königszapfen 41 von der Kamera 30 erfasst sind.

Die Kupplungsplatte 10 kann vor dem Ankuppeln eines Aufliegers 40 insbesondere mittels eines Federelementes 23 zwangsausgerichtet sein, wodurch einerseits ein definiertes Auftreffen der Aufliegerplatte 42 auf die Auffahrrampen 18 der Einfahrhörner 14a, 14b erzielt wird, gleichzeitig aber auch der Sichtkegel 33 der Kamera 30 in einer definierten Lage ausgerichtet ist, so dass relevante Bauteile des Aufliegers 40 wie beispielsweise der Königszapfen 41 bei grober Annäherung des Zugfahrzeugs 50 an den Auflieger 40 in den Sichtkegel 33 hineinwandern.

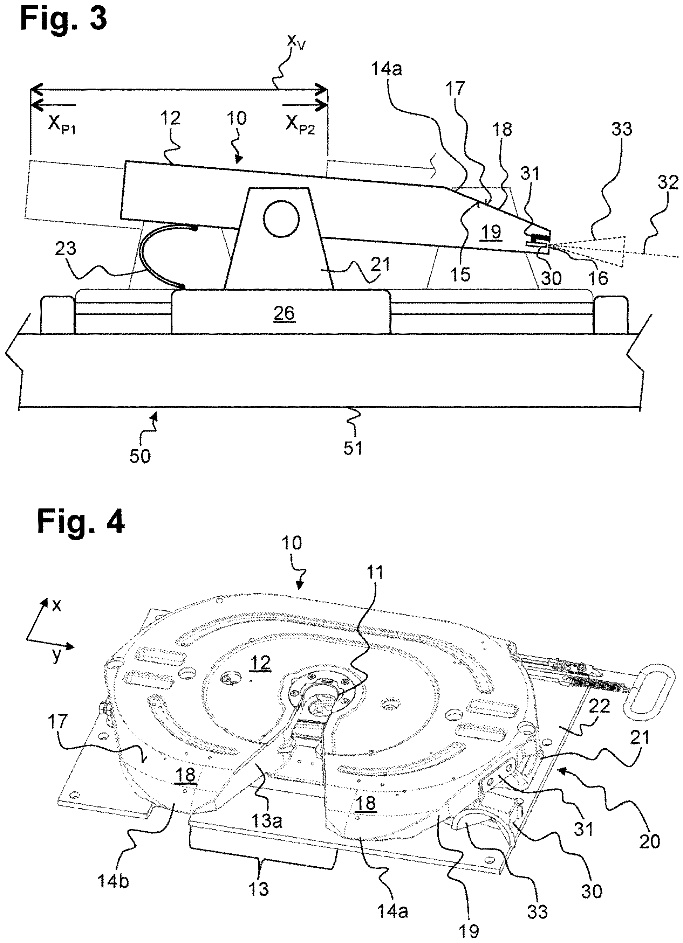

In der Fig. 3 ist ein Ausführungsbeispiel der Erfindung dargestellt, bei dem die Kamera 30 mittels des Kamerahalters 31 an einer bis unter die Auffahrrampe 18 des Einfahrhorns 14a ausgeformte Versteifungsschürze 19 befestigt ist. Der Kameradurchbruch 16 ist ebenfalls endseitig des Einfahrhorns 14a in der Versteifungsschürze 19 ausgebildet.

Die Sattelkupplung der Fig. 3 weist zusätzliche, zu einer Verschiebeeinrichtung 24 gehörende Lagerelemente 20 auf, mit welchen eine Verstellung der Kupplungsplatte 10 in Längsrichtung x möglich ist. Die Verschiebeeinrichtung 24 umfasst hierfür einen Schlitten 26, der beide Lagerböcke 21 trägt und verschiebbar von zwei in Längsrichtung x parallelen Führungsschienen 25 gehalten ist. Die Führungsschienen 25 sind ortsfest zum Fahrzeugrahmen 51 des Zugfahrzeugs 50 angebracht. Die Kupplungsplatte 10 kann somit wahlweise entsprechend eines Verfahrweges xv der Verschiebeeinrichtung 24 zwischen einer vorderen Position X_{P1} und einer hinteren Position X_{P2} des Schlittens 26 gehalten sein. Die zur Kupplungsplatte 10 ortsfeste Position der Kamera 30 ist insofern vorteilhaft, als dass bei einer Verstellung des Schlittens 26 in der Längsachse x der Kupplungsplatte 10 auch die Kamera 30 mitwandert und keine rechnerische Korrektur der von der Kamera 30 bereitgestellten Daten zu erfolgen braucht.

Die Fig. 4 zeigt in einer perspektivischen Ansicht ein weiteres Ausführungsbeispiel, bei dem die Kamera 30 mittels des Kamerahalters 31 von außen an dem Einfahrhorn 14a befestigt ist. Der Sichtkegel 33 ist nach hinten in Richtung des anzukuppelnden Aufliegers 40 gerichtet. Die Kamera 30 ist auf der zu dem konisch ausgeweiteten Abschnitt 13a abgewandten Seite des Einfahrhorns 14a angeordnet.

In Querrichtung y der Kupplungsplatte 10 befindet sich die Kamera 30 seitlich der Auffahrrampe 18. Um eine Kollision mit der Aufliegerplatte 42 während des Ankuppelns des Aufliegers 40 an das Zugfahrzeug 50 auszuschließen, ist die Oberseite der Kamera 30 unter einem vertikalen Niveau einer Oberseite 17 der Einfahrhörner 14a, 14b und der daran ausgeformten Auffahrrampen 28 angeordnet.

### Bezugszeichenliste

- 10: Kupplungsplatte
- 11: Verschlussbereich
- 12: Stützfläche
- 13: Einfahröffnung
- 13a: konischer Abschnitt Einfahröffnung
- 14a,b: Einfahrhörner
- 15: Unterseite Einfahrhorn
- 16: Kameradurchbruch
- 17: Oberseite Einfahrhorn
- 18: Auffahrrampe
- 19: Versteifungsschürze

- 20: Lagerelemente
- 21: Lagerbock
- 22: Montageplatte
- 23: Federelement Zwangsausrichtung
- 24: Verschiebeeinrichtung
- 25: Führungsschienen Verschiebeeinrichtung
- 26: Schlitten Verschiebeeinrichtung

- 30: Kamera
- 31: Kamerahalter
- 32: optische Achse Kamera
- 33: Sichtkegel Kamera

- 40: Auflieger
- 41: Königszapfen
- 42: Aufliegerplatte
- 50: Zugfahrzeug
- 51: Fahrzeugrahmen

- x: Längsrichtung Kupplungsplatte
- X_{P1}: vordere Position Schlitten
- X_{P2}: hintere Position Schlitten
- xv: Verfahrweg Verschiebeeinrichtung
- y: Querrichtung Kupplungsplatte

## Patentansprüche

1. Sattelkupplung mit einer Kupplungsplatte (10) und einer Kamera (30), wobei die Kupplungsplatte (10) mittels von Lagerelementen (20) an einem Zugfahrzeug abgestützt ist, einen zentrisch angeordneten Verschlussbereich (11) zur Aufnahme eines Königszapfens (41), eine den Verschlussbereich (11) seitlich zumindest teilweise umgebende Stützfläche (12) zur Auflage eines Aufliegers (40) sowie eine von dem Verschlussbereich (11) radial verlaufende Einfahröffnung (13) aufweist, welche in einem konisch aufgeweiteten Abschnitt (13a) beidseitig von Einfahrhörnern (14a, 14b) begrenzt ist,
**dadurch gekennzeichnet,**
**dass** die Kamera (30) an einem der Einfahrhörner (14a) angeordnet ist.

2. Sattelkupplung nach Anspruch 1, **dadurch gekennzeichnet, dass** die Kamera (30) an einer Unterseite (15) von einem der Einfahrhörner (14a) befestigt ist.

3. Sattelkupplung nach Anspruch 1 oder 2, **dadurch gekennzeichnet, dass** die Kamera (30) innerhalb einer von der Kupplungsplatte (10) aufgespannten Außenkontur angeordnet und in dem Einfahrhorn (14a) mit der Kamera (30) ein Kameradurchbruch (16) ausgebildet ist.

4. Sattelkupplung nach Anspruch 3, **dadurch gekennzeichnet, dass** die Einfahrhörner (14a, 14b) auf ihrer Oberseite (17) eine in Richtung der Stützfläche (12) aufwärts geneigte Auffahrrampe (18) aufweisen und der Kameradurchbruch (16) in einer der Auffahrrampen (18) ausgeformt ist.

5. Sattelkupplung nach einem der Ansprüche 2 bis 4, **dadurch gekennzeichnet, dass** die Einfahrhörner (14a, 14b) eine senkrecht zur Stützfläche (12) ausgerichtete Versteifungsschürze (19) aufweisen und der Kameradurchbruch (16) in der Versteifungsschürze (19) ausgeformt ist.

6. Sattelkupplung nach Anspruch 1, **dadurch gekennzeichnet, dass** die Kamera (30) auf einer zur Einfahröffnung (13) abgewandten Seite des Einfahrhorns (14a) angeordnet ist.

7. Sattelkupplung nach Anspruch 6, **dadurch gekennzeichnet, dass** die Kamera (30) von einem Kamerahalter (31) getragen ist, der an einem der Einfahrhörner (14a), angreift.

8. Sattelkupplung nach Anspruch 6 oder 7, **dadurch gekennzeichnet, dass** die Kamera (30) in Querrichtung (y) der Kupplungsplatte (10) unter einem vertikalen Niveau einer Oberseite (17) der Einfahrhörner (14a, 14b) angeordnet ist.

9. Sattelkupplung nach einem der Ansprüche 1 bis 8, **dadurch gekennzeichnet, dass** die Kupplungsplatte (10) in lastfreiem Zustand mittels eines Federelementes (23) zwangsausgerichtet ist.

10. Sattelkupplung nach einem der Ansprüche 1 bis 9, **dadurch gekennzeichnet, dass** die Lagerelemente (20) eine Verschiebeeinrichtung (24) umfassen, mit welcher die Kupplungsplatte (10) linear zwischen einer vorderen und einer hinteren Position (X_{P1}, X_{P2}) verfahrbar ist.

## Claims

1. A fifth wheel coupling comprising a coupling plate (10) and a camera (30), wherein the coupling plate (10) is supported on a towing vehicle by means of bearing elements (20), a centrally arranged locking region (11) for receiving a king pin (41), a support surface (12) at least partially laterally surrounding the locking region (11) for supporting a trailer (40) as well as an insertion opening (13) running radially from the locking region (11), which is bordered in a conically widened section (13a) on both sides by insertion flanges (14a , 14b),
**characterized in that,**
the camera (30) is arranged on one of the insertion flanges (14a).

2. The fifth wheel coupling according to claim 1, **characterized in that** the camera (30) is attached to an underside (15) of one of the insertion flanges (14a).

3. The fifth wheel coupling according to claim 1 or 2, **characterized in that** the camera (30) is arranged within an outer contour spanned by the coupling plate (10) and a camera opening (16) is formed in the insertion flange (14a) with the camera (30).

4. The fifth wheel coupling according to claim 3, **characterized in that** the insertion flanges (14a, 14b) possess an access ramp (18) on their top side (17) inclined upwards in the direction of the support surface (12) and the camera opening (16) is formed in one of the access ramps (18).

5. The fifth wheel coupling according to one of claims 2 to 4, **characterized in that** the insertion flanges (14a, 14b) have a stiffening apron (19) aligned perpendicularly to the support surface (12) and the camera opening (16) is formed in the stiffening apron (19).

6. The fifth wheel coupling according to claim 1, **characterized in that** the camera (30) is arranged on a side of the insertion flange (14a) facing away from the insertion opening (13).

7. The fifth wheel coupling according to claim 6, **characterized in that** the camera (30) is carried by a camera holder (31) wherein the camera holder (30) engages one of the insertion flanges (14a).

8. The fifth wheel coupling according to claim 6 or 7, **characterized in that** the camera (30) is arranged in the transverse direction (y) of the coupling plate (10) below a vertical level of a top side (17) of the insertion flanges (14a, 14b).

9. The fifth wheel coupling according to one of claims 1 to 8, **characterized in that** the coupling plate (10) is forcibly aligned in the load-free state by means of a spring element (23).

10. The fifth wheel coupling according to one of claims 1 to 9, **characterized in that** the bearing elements (20) comprise a displacement device (24) with which the coupling plate (10) can be moved linearly between a front and a rear position (X_{P1}, X_{P2}).

## Revendications

1. Couplage de sellette d'attelage comportant une plaque de couplage (10) et une caméra (30), dans lequel la plaque de couplage (10) prend appui sur un véhicule de remorquage au moyen d'éléments de palier (20), présente une zone de verrouillage (11) disposée centralement pour recevoir un pivot d'attelage (41), une surface d'appui (12) entourant latéralement au moins partiellement la zone de verrouillage (11) pour supporter une remorque (40), ainsi qu'une ouverture d'insertion (13) s'étendant radialement à partir de la zone de verrouillage (11), qui est délimitée des deux côtés par des brides d'insertion (14a, 14b) dans une section coniquement élargie (13a),
**caractérisé en ce,**
la caméra (30) est placée sur l'une des brides d'insertion (14a).

2. Couplage de sellette d'attelage selon la revendication 1, **caractérisé en ce que** la caméra (30) est fixée sous une face inférieure (15) de l'une des brides d'insertion (14a).

3. Couplage de sellette d'attelage selon la revendication 1 ou 2, **caractérisé en ce que** la caméra (30) est disposée à l'intérieur d'un contour extérieur serré par la plaque de couplage (10) et **en ce qu'**une ouverture pour caméra (16) est formée dans la bride d'insertion (14a) avec la caméra (30).

4. Couplage de sellette d'attelage selon la revendication 3, **caractérisé en ce que** les brides d'insertion (14a, 14b) présentent sur leur face supérieure (17) une rampe d'accès (18) inclinée vers le haut en direction de la surface d'appui (12), et **en ce que** l'ouverture pour caméra (16) est formée dans l'une des rampes d'accès (18).

5. Couplage de sellette d'attelage selon l'une quelconque des revendications 2 à 4, **caractérisé en ce que** les brides d'insertion (14a, 14b) présentent un tablier de rigidification (19) orienté perpendiculairement à la surface d'appui (12) et **en ce que** l'ouverture de caméra (16) est formée dans le tablier de rigidification (19).

6. Couplage de sellette d'attelage selon la revendication 1, **caractérisé en ce que** la caméra (30) est disposée sur un côté de la bride d'insertion (14a) opposé à l'ouverture d'insertion (13).

7. Couplage de sellette d'attelage selon la revendication 6, **caractérisé en ce que** la caméra (30) est portée par un support de caméra (31) qui s'engage sur l'une des brides d'insertion (14a).

8. Couplage de sellette d'attelage selon la revendication 6 ou 7, **caractérisé en ce que** la caméra (30) est disposée dans la direction transversale (y) de la plaque de couplage (10) au-dessous d'un niveau vertical d'une face supérieure (17) des brides d'insertion (14a, 14b).

9. Couplage de sellette d'attelage selon l'une des revendications 1 à 8, **caractérisé en ce que** la plaque de couplage (10) est alignée de force à l'état sans charge au moyen d'un élément à ressort (23).

10. Couplage de sellette d'attelage selon l'une des revendications 1 à 9, **caractérisé en ce que** les éléments de palier (20) comprennent un dispositif de déplacement (24) au moyen duquel la plaque de couplage (10) peut être déplacée linéairement entre une position avant et une position arrière (X_{P1}, X_{P2}) .
